# EUROPÄISCHE PATENTSCHRIFT

(11) **EP 2 110 571 B1**
(45) Veröffentlichungstag und Bekanntmachung des Hinweises auf die Patenterteilung: **13.05.2015**
(21) Anmeldenummer: 09003865.4
(22) Anmeldetag: 18.03.2009
(51) Int. Cl.: F16C 29/06

(54) **Linearwälzlager mit gesonderten Wälzflächenteilen**
Linear roller bearing with separate raceway components
Roulement linéaire doté d'éléments de surface de roulement séparés

(30) Priorität: 16.04.2008 DE 102008019002
(43) Veröffentlichungstag der Anmeldung: 21.10.2009
(73) Patentinhaber: Robert Bosch GmbH, 70469 Stuttgart (DE)
(72) Erfinder: Pfeuffer, Carsten, 97520 Roethlein (DE); Schupies, Andreas, 97469 Gochsheim (DE); Kuehnlein, Richard, 97782 Graefendorf (DE); Greubel, Roland, 97729 Ramsthal (DE); Klein, Michael, 97506 Grafenrheinfeld (DE); Schlereth, Rudolf, 97705 Burkhardroth-Frauenroth (DE); Rossteuscher, Heinz, 97525 Schwebheim (DE); Frenznick, Sascha, 96114 Hirschaid (DE); Kohlmeier, Hans.-H. Prof. Dr.-Ing., 97437 Hassfurt (DE)
(74) Vertreter: Maiß, Harald

(56) Entgegenhaltungen:
- EP-A1- 1 589 240
- EP-A1- 1 808 608
- EP-A2- 1 443 229
- DE-U1-202004 002 258
- US-A- 5 005 988

## Beschreibung

Die Erfindung betrifft einen Führungswagen gemäß dem Oberbegriff von Anspruch 1, ein Linearwälzlager mit einem derartigen Führungswagen und ein Verfahren zu dessen Herstellung.

Aus der DE 20 2004 002 258 U1 ist ein Linearwälzlager bekannt, bei dem ein Führungswagen über zwei Reihen von Rollen an einer sich in einer Längsrichtung erstreckenden Führungsschiene längsbeweglich abgestützt ist. Der Führungswagen umgreift die Führungsschiene U-förmig, wobei an jedem U-Schenkel eine Rollenreihe vorgesehen ist. Die Wälzflächen für die Rollen sind an einem gesonderten. Wälzflächenteil vorgesehen, das über eine Klebstoffschicht fest mit dem Tragkörper des Führungswagens verbunden ist. Das Wälzflächenteil besitzt einen Vorsprung, mit dem es passgenau in eine entsprechende Ausnehmung des Tragkörpers eingepresst ist. Als Klebstoff werden Loctite 290 und Loctite 4062 vorgeschlagen, also Cyanacrylat-Klebstoffe.

Gemäß der DE 20 2004 002 258 U1 soll mit der Kombination aus Press- und Klebeverbindung eine besonders dünne und gleichmäßige Klebstoffschicht erreicht werden. In der Folge soll sich die Steifigkeit der Führung erhöhen. Hierbei wird insbesondere ausgenutzt, dass das Wälzflächenteil und der Tragkörper durch die Pressverbindung unmittelbar zur Anlage kommen, was sich auf die Steifigkeit erhöhend auswirken soll.

Aus der DE 40 41 269 A1 ist ein weiteres Linearwälzlager bekannt. Bei der Ausführungsform gemäß Fig. 11 sind insgesamt vier endlos umlaufende Rollenreihen vorgesehen. Die Wälzflächen für die Rollen sind an vier gesonderten im Wesentlichen identischen Wälzflächenteilen ausgebildet. Die Wälzflächenteile sind lose in den Tragkörper des Führungswagens eingelegt, wobei deren Rückseite kreisbogenförmig ausgeführt ist, damit sich die Wälzflächenteile nach den Rollen ausrichten können. Es hat sich gezeigt, dass ein derartiger Führungswagen nur eine minimal geringere Steifigkeit aufweist als ein Führungswagen, bei dem die Wälzflächen für die Rollen unmittelbar an dem Tragkörper vorgesehen sind. Der Steifigkeitsverlust wird maßgeblich durch die Dicke der Stahleinlagen bestimmt. Diese sollten möglichst dünn sein, damit das Linearwälzlager eine hohe Führungssteifigkeit aufweist. Die Dicke der Stahleinlagen ist hierbei allerdings nach unten begrenzt, da gewährleistet sein muss, dass die linienförmig auf die Wälzflächenteile einwirkenden Auflagekräfte der Rollen möglichst gleichförmig auf die gesamte Rückseite der Wälzflächenteile verteilt werden.

Die vorstehende Ausführungsform hat den Nachteil, dass das Wälzflächenteil gesondert vom Tragkörper des Führungswagens fertig bearbeitet werden muss. Die sich hierdurch ergebende Dickentoleranz des Wälzflächenteils wirkt sich negativ auf die Führungspräzision des Linearwälzlagers aus. Weiter kann es durch Formabweichungen in den Anlageflächen zwischen Wälzflächenteil und Tragkörper dazu kommen, dass die Wälzflächen nicht exakt eben sind. Dies hat zur Folge, dass die Kraftübertragung an den Rollen nicht mehr über deren gesamte Breite stattfindet, sondern nur noch punktförmig, wodurch die Lebensdauer des Linearwälzlagers erheblich reduziert wird.

Aus der US 5 005 998 A ist ein Führungswagen für ein Linearwälzlager bekannt. Dieser ist über vier Reihen von Rollen an einer sich in einer Längsrichtung erstreckenden Führungsschiene längsbeweglich abgestützt. Jeder Rollenreihe ist ein Wälzflächenteil für die Rollen zugeordnet. Die Rollen liegen dabei hauptsächlich mit ihren ebenen Stirnflächen an dem Wälzflächenteil an. Das Wälzflächenteil umgreift die Rollen weiter an ihrer im Wesentlichen kreiszylindrischen Umfangsfläche, um die Rollen im Führungswagen zu halten, wenn sich dieser nicht auf der Führungsschiene befindet. Das Last übertragende Abwälzen der Rollen findet jedoch unmittelbar an einem Tragkörper des Führungswagens statt. Die als Wälzflächenteile bezeichneten Teile dienen eher der seitlichen Führung der Rollen, wobei die Rollen nicht im eigentlichen Wortsinn an den Wälzflächenteilen abwälzen, sondern vielmehr an diesen entlang gleiten. Sie bestehen deshalb aus einem reibungsarmen Material wie Nylon. Die Wälzflächenteile sind in einer L-förmigen Ausnehmung des Tragkörpers aufgenommen.

Aus der EP 1 808 608 A1 ist eine U-förmige Führungsschiene bekannt, an der ein Führungswagen über mehrere Reihen von Kugeln linearbeweglich geführt ist. Die Kugeln wälzen auf einem Wälzflächenteil ab. Das Wälzflächenteil ist mit einer Klebstoffschicht mit einem Tragkörper der Führungsschiene verbunden, wobei die Klebstoffschicht an der der Wälzfläche abgewandten Rückseite des Wälzflächenteils eben ausgeführt ist.

Die Erfindung wird durch die selbstständigen Ansprüche definiert. Demgemäß wird vorgeschlagen, dass die Klebstoffschicht an der der Wälzfläche abgewandten Rückseite des Wälzflächenteils im Wesentlichen eben ausgeführt ist, wobei das Wälzflächenteil in einer im Querschnitt betrachtet L-förmigen Ausnehmung des Tragkörpers aufgenommen ist. Unter einer L-förmigen Ausnehmung soll eine Ausnehmung verstanden werden, die zwei Seitenflächen aufweist, die im Wesentlichen L-förmig zueinander ausgerichtet sind, so dass sie das Wälzflächenteil in zwei zueinander senkrechten Richtungen abstützen können. Das Wälzflächenteil liegt somit in der Querschnitt betrachtet statisch bestimmt am Tragkörper an. Die ebene Klebstoffschicht impliziert, dass der zugeordnete erste Schenkel der L-förmigen Ausnehmung und die Rückseite des Wälzflächenteils als ebene Fläche ausgeführt sind, was zur Folge hat, dass das Wälzflächenteil während des Klebevorgangs frei gegenüber dem Tragkörper verschoben werden kann. In diesem Zusammenhang wird ausdrücklich darauf hingewiesen, dass das Wälzflächenteil durchaus mit Abstand zum zweiten Schenkel in der L-förmigen Ausnehmung angeordnet sein kann, ohne die Wirkung der Erfindung zu beeinträchtigen. Während der erste L-Schenkel ein Last übertragende Funktion aufweist, dient der zweite L-Schenkel primär als Auffangfläche für überschüssigen Klebstoff. Im Zusammenwirken mit dem überschüssigen Klebstoff trägt er auch zum Ausrichten des Wälzflächenteils quer zur Längsrichtung bei.

Mit der vorgeschlagenen Ausgestaltung wird einerseits erreicht, dass verhältnismäßig dünne Wälzflächenteile zum Einsatz kommen können, weil sich durch die im Wesentlichen ebene Wälzfläche und die im Wesentlichen ebene Klebstoffschicht ein im Wesentlichen plattenartiges Wälzflächenteil ergibt. Folglich besitzt das Linearwälzlager eine hohe Steifigkeit. Die Klebstoffschicht ist hierbei vorzugsweise parallel zur Wälzfläche angeordnet.

Gleichzeitig kann das Wälzflächenteil durch die Klebung im eingebauten Zustand bearbeitet, insbesondere geschliffen, werden, um eine hohe Formgenauigkeit der Wälzflächen zu erzielen. Die Wälzflächenteile bestehen hierbei vorzugsweise aus gehärtetem Wälzlagerstahl. Als Rohmaterial für das Wälzflächenteil kommt insbesondere ein kalt gewalzter Profilstab in Betracht, der nur noch auf Länge zugeschnitten und gehärtet werden muss, um ein klebefertiges Rohteil zu erhalten. Es ist aber auch denkbar, die Rohteile aus Blech auszuschneiden.

Entscheidend für die Dauerhaltbarkeit der Klebeverbindung ist, dass bei deren Herstellung keine unnötigen Spannungen in die Klebstoffschicht eingebracht werden, was durch die statisch bestimmte Anlage in der L-förmigen Ausnehmung erreicht wird. Linearwälzlager mit rollenförmigen Wälzkörpern werden in der Regel vorgespannt, damit sie auch unter Last spielfrei arbeiten. Hierfür sind üblicherweise mehrere Reihen von Rollen vorgesehen, wobei die Rollen unter Vorspannung zwischen Führungsschiene und Führungswagen eingebaut sind. Zur Einstellung der Vorspannung wird der Rollendurchmesser etwas größer ausgewählt als dies für den spielfreien Einbau der Rollen notwendig wäre. Durch diese Vorspannkräfte werden hohe Druckspannungen in die Klebstoffschicht eingebracht, welche durch die im Betrieb auf das Linearwälzlager einwirkenden äußeren Kräfte weiter verstärkt werden. Die Druckbelastung allein ist für die Klebschicht aber unschädlich, da eine Verschiebung des Wälzflächenteils gegenüber dem Tragteil und damit ein Bruch der Klebstoffschicht durch reine Druckbeanspruchung ausgeschlossen ist. Kritisch wird der Spannungszustand, wenn zusätzliche Spannungen, insbesondere Schubspannungen auftreten, die ein Verschieben des Wälzflächenteils relativ zum Tragkörper zur Folge haben können, da dies zum Bruch der Klebstoffschicht führt.

Hieraus ergibt sich die Forderung, dass das Wälzflächenteil quer zur Lastrichtung der Rollen nicht statisch überbestimmt in den Tragkörper eingebaut sein darf, weil hierdurch bereits bei der Montage Spannungen in der Klebstoffschicht entstehen. Dies wird erfindungsgemäß durch die Aufnahme des Wälzflächenteils in der L-förmigen Ausnehmung erreicht.

Die Spannungen durch eine Pressverbindung gemäß der DE 20 2004 002 258 U1 wirken sich demgegenüber negativ auf die Haltbarkeit der Klebeverbindung aus, insbesondere wenn wie im vorliegenden Fall aufgrund eines sehr dünnen Wälzflächeteils nur eine wenig tragfähige Pressverbindung zum Einsatz kommen kann. Eine derartige Pressverbindung erzeugt hauptsächlich Spannungen in der Klebstoffschicht und trägt kaum zur Lastübertragung bei. Auch eine gekrümmte Klebschicht, wie sie durch die DE 40 41 269 A1 angeregt wird, ist zu vermeiden, da diese bereits durch die Druckkraft der Rollen Schubspannungen in die Klebschicht induziert. Weiter wirkt sich das mögliche Verkippen der Wälzflächenteile negativ auf die Haltbarkeit der Klebeverbindung aus, da gerade dieses zum Bruch der Klebschicht führen kann, wenn die Wälzflächen an der Führungsschiene und am Führungswagen nicht exakt parallel sind, beispielsweise aufgrund von Fertigungsungenauigkeiten oder aufgrund einer hohen äußeren Last.

In den Unteransprüchen sind vorteilhaft Weiterbildungen und Verbesserungen angegeben.

Die Klebstoffschicht kann den Rücken des Wälzflächenteils im Wesentlichen vollständig von dem Tragkörper trennen. Die Klebstoffschicht kann folglich genutzt werden, um Unebenheiten an dem Tragkörper und dem Wälzflächenteil auszugleichen, weshalb diese vor der abschließenden Endbearbeitung, insbesondere Schleifbearbeitung, nicht übermäßig genau bearbeitet werden müssen. Gleichzeitig wird durch die vollflächige Klebstoffschicht eine gleichförmige Kraftübertragung über die gesamte Rückenfläche des Wälzflächenteils erreicht. Punktförmige Belastungsspitzen, die einen Riss in der Klebstoffschicht auslösen könnten, sind ausgeschlossen.

Das Wälzflächenteil kann seitlich mit einem Schenkel der L-förmigen Ausnehmung verklebt sein. Da das Wälzflächenteil nur an einer seiner Seitenflächen über eine Klebstoffschicht an der L-förmigen Ausnehmung im Tragkörper abgestützt ist, sind Verspannungen der Klebstoffschicht von vornherein ausgeschlossen. Der seitliche Spalt zwischen dem Wälzflächenteil und der L-förmigen Ausnehmung dient zur Aufnahme von Klebstoff, der am Rücken des Wälzflächenteils zu viel aufgetragen wurde. Dieser soll in diesen definierten Spalt hineinlaufen, wobei der Spalt vorzugsweise so bemessen ist, dass der überschüssige Klebstoff diesen Spalt nicht vollständig ausfüllt. Die vorgeschlagene Ausgestaltung des Überlaufraums für den Klebstoff hat zur Folge, dass am Tragkörper besonders wenig Material entfernt werden muss, was dessen Steifigkeit vermindern würde. Es ist darauf hinzuweisen, dass gerade in diesem Bereich besonders hohe Materialspannungen im Tragkörper auftreten, weshalb auch die vorgeschlagene Ausgestaltung die Steifigkeit besonders wirksam erhöht. Der durch die seitliche Klebeverbindung unvermeidbare Abstützeffekt tritt in den Hintergrund, weil erfindungsgemäß gerade vermieden werden soll, dass Belastungen in Querrichtung auf das Wälzflächenteil einwirken.

Der Klebstoff kann ein Epoxydharz sein. Epoxydharze haben die Eigenschaft, dass sie beim Aushärten nahezu nicht schrumpfen, weshalb beim Aushärten keine Eigenspannungen in der Klebstoffschicht entstehen, die in Kombination mit den Druckspannungen durch die Wälzkörperkräfte zu einem Bruch der Klebstoffschicht führen könnten. Überdies weisen Klebstoffe auf Basis von Epoxydharz eine hohe Beständigkeit gegen die im Umfeld von Linearwälzlagern vorkommenden Flüssigkeiten wie Schmieröl und Kühl-Schmier-Flüssigkeiten auf, so dass diese die Dauerhaltbarkeit der Klebeverbindung nicht beeinträchtigen können. Der Epoxydharzkleber kann wahlweise mit einem Füllstoff versehen sein oder nicht. Ein Kleber ohne Füllstoff ist bei der Herstellung der Klebeverbindung einfacher zu handhaben und ergibt überdies eine sehr dünne Klebstoffschicht, die folglich einen geringen Einfluss auf die Gesamtsteifigkeit des Führungswagens hat. Ein Kleber mit Füllstoff kann demgegenüber eine höhere Druckkraft übertragen, da ein Teil der Druckkräfte direkt über den tragfähigeren Füllstoff vom Wälzflächenteil an den Tragkörper weitergegeben werden kann. Hierbei ist insbesondere an einen Füllstoff in Form von kugelförmigen Metallpartikeln gedacht.

Das Wälzflächenteil kann an der Vorderseite mit der Wälzfläche im Wesentlichen eben ausgeführt sein. Auf diese Weise wird vermieden, dass das Wälzflächenteil die Rollen seitlich abstützt, wodurch Querkräfte in die Klebstoffschicht eingeleitet werden würden. Die Seitenführung der Rollen kann einerseits unmittelbar vom Tragkörper übernommen werden, da hierdurch zusätzlich die Steifigkeit des Tragkörpers gesteigert wird. Ursächlich hierfür ist, dass sich die entsprechende Führungsgeometrie in einem Bereich des Tragkörpers befindet, in dem besonders hohe Spannungen auftreten. Es können ein oder mehrere gesonderte Führungsteile, insbesondere Kunststoffteile, vorgesehen sein, die die Rollen seitlich führen, wobei eine Kombination aus beiden Führungsarten ebenfalls denkbar ist. Gesonderte Führungsteile aus Kunststoff sind besonders vorteilhaft, wenn an diesen Haltevorsprünge vorgesehen sind, die die Rollen umgreifen können, so dass diese nicht aus dem Führungswagen herausfallen, wenn dieser sich nicht auf der Führungsschiene befindet. Die Haltevorsprünge lassen sich im Spritzgussverfahren besonders kostengünstig herstellen. Überdies werden durch die gesonderten Führungsteile Hinterschneidungen am Tragkörper mit eingeklebten Wälzflächenteilen vermieden, so dass die Führungskonturen für die Rollen gemeinsam mit den Wälzflächen bearbeitet, insbesondere geschliffen, werden können. Die ebene Vorderseite des Wälzflächenteils ist vorzugsweise parallel zur ebenen Rückseite des Wälzflächenteils, damit letztgenanntes besonders einfach hergestellt werden kann.

An dem Tragkörper kann ein dachförmiger Vorsprung vorgesehen sein, an dessen beiden Dachhälften je ein Wälzflächenteil für je eine gesonderte Rollenreihe vorgesehen ist, wobei die beiden Wälzflächenteile bündig mit dem Scheitel des dachförmigen Vorsprungs abschließen oder über diesen überstehen. Linearwälzlager mit rollenförmigen Wälzkörpern besitzen in der Regel mehrere Rollenreihen, die gegeneinander verspannt sind, um auch unter Last einen spielfreien Führungseingriff zwischen Führungswagen und Führungsschiene zu gewährleisten. Durch die vorgeschlagene Tragkörpergeometrie können die Wälzflächenteile besonders einfach mit dem Tragkörper verklebt werden. Hierbei können zwei Wälzflächenteile in einer V-förmigen Ausnehmung einer Montagehilfe ausgerichtet gehalten werden, wobei Klebstoff auf den Tragkörper und/oder die Wälzflächenteile aufgetragen wird und wobei die Wälzflächenteile mit der Montagehilfe gegen den dachförmigen Vorsprung des Tragkörpers gepresst werden. Sofern die Wälzflächenteile wie bevorzugt mit zwei parallelen Oberflächen ausgeführt sind, ist die V-förmige Ausnehmung der Montagehilfe im Wesentlichen parallel zu dem dachförmigen Vorsprung am Tragkörper ausgeführt, so dass sich eine Klebstoffschicht mit konstanter Dicke ergibt. Die Wälzflächenteile können in der Montagehilfe beispielsweise mittels Vakuumansaugung oder Magnetkraft gehalten sein. Zur Ausrichtung der Wälzflächenteile ist am Grund der V-förmigen Ausnehmung eine Ausrichtkontur vorgesehen, die an der zugeordneten Seitenfläche des Wälzflächenteils anliegt. Hierfür ist es notwendig, dass die beiden Wälzflächenteile bündig mit dem Scheitel des dachförmigen Vorsprungs abschließen oder über diesen überstehen, damit die Montagehilfe während dem Eindrücken der Wälzflächenteile in den Tragkörper nicht an den Scheitel des dachförmigen Vorsprungs anstößt, wodurch die Ausbildung einer gleichmäßig dünnen Klebstoffschicht verhindert werden würde.

Da die Wälzflächen der Wälzflächenteile durch die V-förmige Ausnehmung der Montagehilfe sehr genau in die gewünschte Position gebracht werden können, muss für die nachfolgende Feinbearbeitung, beispielsweise eine Schleifbearbeitung, der Wälzflächenteile nur ein geringes Aufmaß vorgehalten werden. Die Feinbearbeitung kann daher besonders schnell und kostengünstig durchgeführt werden.

Es können zwei gegenüberliegende Paare von Rollenreihen gemäß der vorstehend beschriebenen Ausführungsform vorgesehen sein, um ein Linearwälzlager mit vier Rollenreihen zu schaffen. Der Tragkörper ist vorzugsweise U-förmig ausgebildet, so dass er die Führungsschiene umgreifen kann. Für die Montage der vier Wälzflächenteile wird vorzugsweise eine einzige Montagehilfe verwendet, so dass alle vier Wälzflächen genau zueinander ausgerichtet sind. Jedem der beiden V-förmigen Vorsprünge am Tragkörper ist hierbei ein beweglicher Backen der Montagehilfe zugeordnet, wobei die Backen relativ zueinander bewegt werden können, um die Eindrückbewegung zum Verkleben der Wälzflächenteile auszuführen.

An wenigstens einer Längsstirnfläche des Tragkörpers kann eine gesonderte Umlenkbaugruppe für die Rollen vorgesehen sein, damit diese endlos umlaufen können, wobei an der Umlenkbaugruppe wenigstens ein sich in Längsrichtung erstreckender Führungsfortsatz vorgesehen ist, der im Bereich des Scheitels des dachförmigen Vorsprungs an den zugeordneten Wälzflächenteilen anliegt, so dass die Umlenkbaugruppe relativ zum Tragkörper ausgerichtet ist. Die entsprechenden Seitenflächen der Wälzflächenteile können auf kostengünstige Weise besonders genau hergestellt werden, indem diese gleichzeitig mit den zugeordneten Wälzflächen feinbearbeitet, insbesondere geschliffen, werden. Folglich kann die Umlenkbaugruppe über die Wälzflächenteile besonders genau relativ zum Tragkörper ausgerichtet werden, was für einen störungsfreien Ablauf der Rollen wichtig ist.

Alle Wälzflächenteile eines Führungswagens können im Wesentlichen identisch ausgeführt sein, damit diese kostengünstig hergestellt werden können. Mit der oben vorgeschlagenen Ausführung des Tragkörpers ist dies ohne weiteres möglich.

Wenigstens ein endseitiger Rolleneinlaufbereich des Wälzflächenteils kann biegeverformbar ausgeführt sein, wobei in dem Rolleneinlaufbereich zwischen dem Wälzflächenteil und dem Tragkörper entweder ein Freiraum oder eine Füllschicht mit einer wesentlich höheren Elastizität als die Klebstoffschicht vorgesehen ist. Mit dieser Ausführungsform soll der aus der EP 1 443 229 A2 bekannte verbesserte Einlauf der Rollen in den Last übertragenden Bereich erzielt werden. Durch den biegeverformbaren Rolleneinlaufbereich werden die Rollen langsam von einem lastfreien in einen voll belasteten Zustand übergeführt. Mit der vorgeschlagenen Ausführungsform kann auf die bekannte gesonderte Ausnehmung zwischen dem Wälzflächenteil und dem Tragkörper verzichtet werden. Der mögliche Biegeweg des Wälzflächenteils wird dementsprechend durch die Dicke der Klebstoffschicht bestimmt. Um eine ausreichende Klebschichtdicke zu ermöglichen, wird bei dieser Ausführungsform vorzugsweise ein mit einem Füllstoff versehener Klebstoff verwendet.

Die Verwendung einer Füllschicht in dem biegeelastischen Bereich ist bevorzugt, damit kein Spalt zwischen dem Wälzflächenteil und dem Tragkörper vorhanden ist, der bei einer der Verklebung nachfolgenden Schleifbearbeitung durch Schleifspäne verschmutzt werden könnte. Diese Schleifspäne können nur sehr mühsam aus dem dünnen Spalt entfernt werden, wobei zurückbleibende Schleifspäne die Biegebewegung des Wälzflächenteils behindern würden.

Das Wälzflächenteil kann im Rolleneinlaufbereich dünner ausgeführt sein als außerhalb des Rolleneinlaufbereichs, damit ein ungefüllter Klebstoff zum Einsatz kommen kann. Ungefüllte Klebstoffe sind regelmäßig einfacher und kostengünstiger anzuwenden. Die erzielbare Klebstoffdicke ist aber regelmäßig nicht ausreichend, um den für den oben genannten Einlaufeffekt notwendigen Biegeweg zu erzielen. Das Abflachen des Wälzflächenteils wird vorzugsweise vor dem Härten desselben spanlos, beispielsweise durch Pressen, kostengünstig hergestellt. Es ist darauf hinzuweisen, dass sich auch bei dieser Ausführungsform kein Klebstoff in dem biegeelastischen Einlaufbereich befinden darf, da dieser die Biegebewegung des Wälzflächenteils behindern würde.

Die Füllschicht kann fest an dem Wälzflächenteil anhaften, wobei sie am Tragkörper lose aufliegt. Somit ist es möglich, die Füllschicht auf das separate Wälzflächenteil aufzubringen. Dies kann beispielsweise mit Hilfe einer Maske geschehen, die auf das Wälzflächenteil aufgelegt wird und in deren Freiräume der Füllstoff eingebracht wird. Die so auf das Wälzflächenteil aufgebrachte Füllschicht kann nun problemlos daraufhin geprüft werden, ob sie den gewünschten Bereich des Wälzflächenteils tatsächlich abdeckt. Dies wäre nicht möglich, wenn die Füllschicht sowohl am Wälzflächenteil als auch am Tragteil anhaften würde, da die Füllschicht nicht für eine Sichtprüfung zugänglich wäre. Bei dieser Ausführungsform definiert die vorab aufgebrachte Füllschicht auch den Bereich des Wälzflächenteils, in die kein Klebstoff gelangen soll, da die Füllschicht verhindert, dass Klebstoff dorthin fließt.

Das Wälzflächenteil kann über wenigstens eine, vorzugsweise über beide, Längsstirnflächen des Tragkörpers überstehen. Auf diese Weise kann der biegeelastische Rolleneinlaufbereich verlängert werden, ohne dass der teuere Stahl-Tragkörper verlängert werden muss. Es ist ausreichend, wenn in der kostengünstigen Umlenkbaugruppe aus Kunststoff genügend Freiraum für das überstehende Wälzflächenteil vorhanden ist. In diesem Zusammenhang ist darauf hinzuweisen, dass sich die notwendige Länge des biegeelastischen Rolleneinlaufbereichs dadurch bestimmt, dass gewährleistet sein muss, dass die Rollen in jedem Betriebszustand des Linearwälzlagers im Wesentlichen lastfrei mit der Wälzfläche des Wälzflächenteils in Berührung kommen müssen, wenn sie in den Tragbereich einlaufen.

Die Dicke des Wälzflächenteils kann zwischen 35 % und 50 %, vorzugsweise zwischen 40 % und 45 % des Rollendurchmessers betragen. Diese Dicke des Wälzflächenteils ist die minimale Dicke, bei der gewährleistet ist, dass die linienförmig in das Wälzflächenteil eingeleiteten Druckkräfte der Rollen im Wesentlichen gleichförmig auf die Rückseite des Wälzflächenteils übertragen werden. Hierbei ist anzumerken, dass gewisse Ungleichförmigkeiten in der Lastverteilung an der Rückseite des Wälzflächenteils unvermeidbar sind. Es muss jedoch gewährleistet sein, dass die Belastungsspitzen keine plastische Verformung des Tragkörpers, der Klebstoffschicht oder des Wälzflächenteils zur Folge haben, da hierdurch die Vorspannung des Führungswagens herabgesetzt werden würde.

Die Erfindung wird im Folgenden anhand der beigefügten Zeichnung näher erläutert. Es stellt dar:
- Fig. 1: eine perspektivische Ansicht eines erfindungsgemäßen Linearwälzlagers;
- Fig. 2: ein Querschnitt des Linearwälzlagers gemäß Fig. 1;
- Fig. 2a: eine vergrößerte Teilansicht von Fig. 2 im Bereich der Wälzflächenteile;
- Fig. 3: eine perspektivische Ansicht der Endkappe des Linearwälzlagers gemäß Fig. 1 von der dem Tragkörper zugewandten Seite;
- Fig. 4: ein grobschematischer Längsschnitt eines verklebten Wälzflächenteils; und
- Fig. 5: eine grobschematische Darstellung des Klebeprozesses.

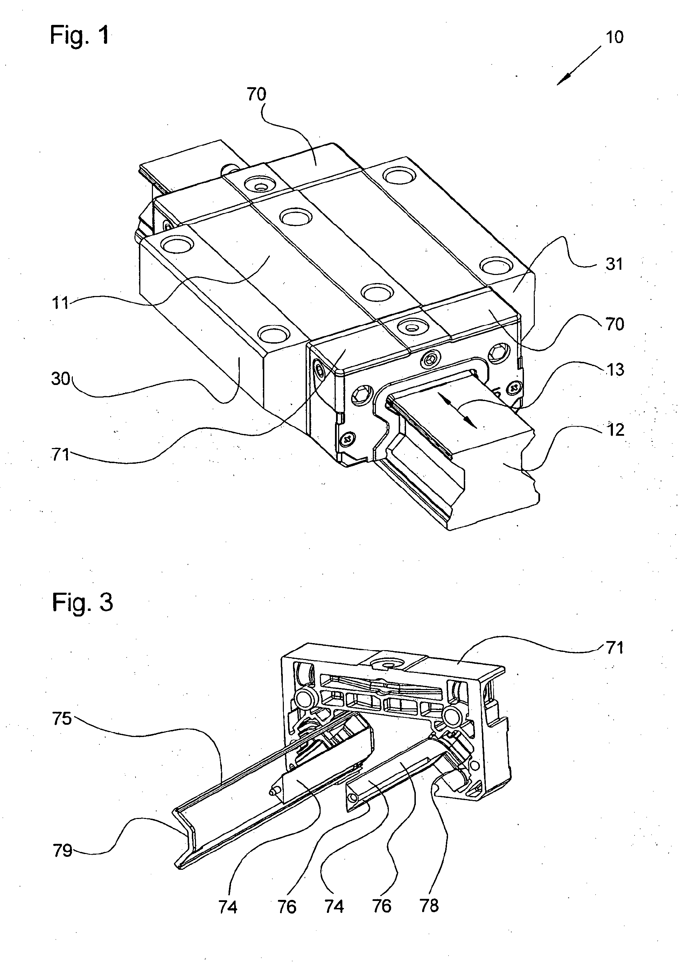

In Fig. 1 ist ein erfindungsgemäßes Linearwälzlager ganz allgemein mit 10 bezeichnet. Dieses Linearwälzlager ist im Wesentlichen gemäß der DE 10 2007 056 862 ausgeführt, die hiermit in Bezug genommen und zum Inhalt der vorliegenden Anmeldung gemacht wird. Das Linearwälzlager 10 umfasst eine sich in einer Längsrichtung 13 erstreckende Führungsschiene 12 aus gehärtetem Stahl, auf der ein Führungswagen 11 längsbeweglich abgestützt ist. Der Führungswagen 11 besteht aus einem Tragkörper 30 aus ungehärtetem Stahl, an dessen beiden Längsstirnflächen 31 je eine Umlenkbaugruppe 70 für die im Führungswagen 11 endlos umlaufenden Rollen befestigt ist.

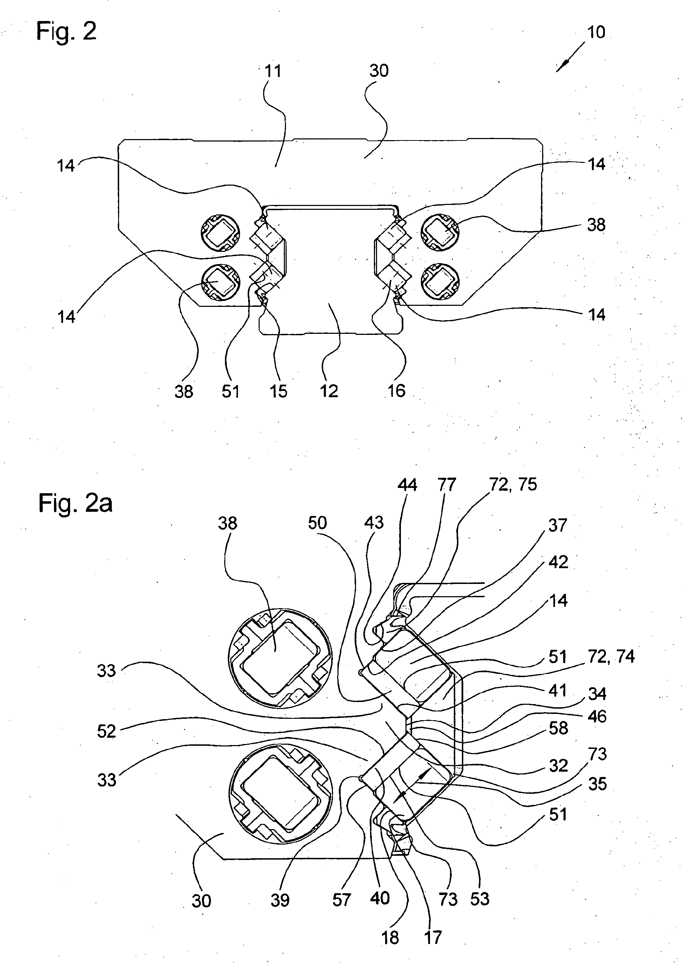

Fig. 2 zeigt einen Querschnitt des Linearwälzlagers 10. Beim vorliegenden Ausführungsbeispiel umgreift der Führungswagen 11 die Führungsschiene 12 U-förmig, wobei die Kombination aus einer U-förmigen Führungsschiene in Kombination mit einem blockartigen Führungswagen ebenfalls denkbar ist. Es sind vier tragende Reihen von Rollen 14 zwischen dem Tragkörper 30 und der Führungsschiene 12 angeordnet, deren Drucklinien 16 in bekannter Weise O-förmig ausgerichtet sind, um eine in alle Richtungen gleichmäßige Tragfähigkeit des Linearwälzlagers 10 zu erzielen. Sowohl an der Führungsschiene 12 als auch am Führungswagen 11 sind Wälzflächen 15; 51 vorgesehen, auf denen die Rollen 14 Last übertragend abwälzen können. Jede tragende Rollenreihe ist über die oben genannten Umlenkbaugruppen mit einem zugeordneten Rücklaufkanal 38 verbunden, so dass die Rollen endlos umlaufen können. Beim vorliegenden Führungswagen 11 kreuzen sich die gebogenen Umlenkkanäle in den Umlenkbaugruppen. Man spricht daher auch von einer Überkreuzumlenkung.

Fig. 2a zeigt einen vergrößerten Ausschnitt von Fig. 2, in dem die Wälzflächenteile 50 mit den Wälzflächen 51 für die Rollen 14 genauer zu erkennen sind. Die Wälzflächenteile 50 aus gehärtetem Stahl besitzen eine im Wesentlichen rechteckige Querschnittsform mit einer Vorderseite 53, an der die Wälzfläche 51 vorgesehen ist, einer gegenüberliegenden Rückseite 52 und zwei Seitenflächen 57; 58, wobei die Querschnittsform über die gesamte Länge des Wälzflächenteils im Wesentlichen konstant ist. Die Wälzflächenteile 50 sind wahlweise aus einem ungehärteten Blechmaterial ausgeschnitten oder von einem ungehärteten, kalt gewalzten Profilstab abgeschnitten, wobei sie anschließend gehärtet wurden. Nach dem Verkleben mit der L-förmigen Ausnehmung 40 im Tragkörper 30 werden die Wälzflächen 51 an den Wälzflächenteilen 50 gemeinsam mit den an diesen angrenzenden Konturen des Tragkörpers 30 geschliffen. Die Wälzflächenteile 50 sind an der Rückseite 52 und der ersten Seitenfläche 57 mit dem Tragkörper 30 verklebt. Der Klebstoff in Form eines Epoxydharzes wird nur an der Rückseite 52 des Wälzflächenteils 50 und/oder dem ersten L-Schenkel 41 aufgetragen, wobei eine Vielzahl von gesonderten Klebstoffpunkten auf die genannten Flächen aufgebracht werden, damit die Luft während dem Anpressen des Wälzflächenteils 50 an den Tragkörper 30 möglichst vollständig aus dem Klebespalt entweichen kann. Der seitliche Klebespalt 43 wird beim Anpressen des Wälzflächenteils 50 an den Tragkörper 30 mit dem überschüssigen Klebstoff aufgefüllt. Die Klebstoffmenge und die Klebespaltbreiten sind so ausgelegt, dass sichergestellt ist, dass der seitliche Klebespalt 43 nicht vollständig mit Klebstoff aufgefüllt wird, damit kein Klebstoff in den Bereich der anschließend zu schleifenden Flächen gelangt. Dies könnte den Schleifprozess negativ beeinflussen. Im Eck zwischen dem ersten und dem zweiten Schenkel 41; 42 der L-förmigen Ausnehmung 40 ist ein Freistich 39 im Tragkörper 30 vorgesehen, um sicher zu stellen, dass das Wälzflächenteil 50 an dieser Stelle nicht punktförmig am Tragkörper 30 anliegt, wodurch eine gleichförmige Lastübertragung über die Klebstoffschicht verhindert werden würde.

Jeweils zwei L-förmige Ausnehmungen 40 bilden zusammen einen dachförmigen Vorsprung 32 an dem Tragkörper 30, wobei die beiden ersten L-Schenkel 41 die beiden Dachhälften 33 bilden. Der Scheitel 34 des dachförmigen Vorsprungs 32, also die Kontur, an der die beiden Dachhälften 33 aufeinanderstoßen, ist gegenüber den Wälzflächenteilen 50 etwas zurück versetzt. Der Scheitel 34 wird dementsprechend beim gemeinsamen Schleifen der beiden zweiten Seitenflächen 58 der benachbarten Wälzflächenteile 50 nicht mitbearbeitet, so dass ein Ausbrechen der Schleifscheibe in diesem Bereich nicht zu befürchten ist.

Die Vorderseite 53 des Wälzflächenteils 50 mit der Wälzfläche 51 ist komplett eben ausgeführt, damit die Rollen 14 in Querrichtung 35 nicht äm Wälzflächenteil 50 abgestützt sind. Die Rollen 14 werden stattdessen über gesonderte Führungsteile 72 seitlich geführt. Zum Einen ist ein sich in Längsrichtung erstreckender Führungsfortsatz 74 vorgesehen, der einstückig mit der Endkappe (siehe Fig. 3) der Umlenkbaugruppe ausgeführt ist. Der Führungsfortsatz 74 liegt an den genau bearbeiteten zweiten Seitenflächen 58 zweier benachbarter Wälzflächenteile 50 mit geringer Vorspannung an, während zum Tragkörper 30 hin ein Spalt 46 vorgesehen ist. Die beiden Anlageflächen 76 (siehe Fig. 3) des Führungsfortsatzes 74 sind komplett eben ausgeführt, so dass die zweiten Seitenflächen 58 der Wälzflächenteile 50 die Lage der seitlichen Führungsflächen für die Rollen 14 definieren.

Auf der dem Führungsfortsatz 74 gegenüberliegenden Seite der Rollen 14 wird die Seitenführung der Rollen 14 durch einen gesonderten Dichtungsrahmen 75 (siehe Fig. 3) bewirkt, der unmittelbar am Tragkörper 30 anliegt. Sowohl am Dichtungsrahmen 75 als auch am Führungsfortsatz 74 sind Haltevorsprünge 73 vorgesehen, die die Rollen 14 im Bereich ihres Eckenradius 17 umgreifen, damit diese nicht aus dem Führungswagen 11 herausfallen können, wenn sich dieser nicht auf der Führungsschiene befindet. Zur Verstärkung des Halteeffektes liegt der Dichtungsrahmen 75 an einer Fläche 44 an, die relativ zur Stirnfläche 18 der Rollen 14 leicht geneigt angeordnet ist. Wenn die Rollen 14 von den zugeordneten Wälzflächen 51 abheben, nehmen diese den Dichtrahmen 75 über die Haltevorsprünge 73 mit. Aufgrund der geneigten Fläche 44 bewegt sich der Dichtungsrahmen 75 auf die Rolle 14 zu, wodurch das seitliche Führungsspiel zwischen den Rollen 14 und den Führungsteilen 72 aufgehoben wird, so dass die Rollen 14 zwischen den Führungsteilen 74; 75 eingeklemmt werden. Durch diese Klemmwirkung wird der Rollenhalt deutlich verbessert. An dem Dichtrahmen 75 ist benachbart zu den Haltevorsprüngen eine Dichtlippe 77 vorgesehen, die an der Führungsschiene anliegt, um eine Längsabdichtung des Linearwälzlagers zu bewirken.

Bei der vorliegenden Ausführungsform ist auch am Tragkörper 30 eine Abstützfläche 37 für die Rollen 14 vorgesehen. Diese Abstützfläche 37 ist hauptsächlich deshalb vorhanden, damit zum Rücklaufkanal 38 hin genügend tragende Materialbreite vorhanden ist. Hierdurch kann die Steifigkeit des Linearwälzlagers merklich verbessert werden. Es ist drauf hinzuweisen, dass der Dichtungsrahmen 75 und die Abstützflächen 37 so aufeinander abgestimmt sind, dass die ebenen Stirnflächen 18 der Rollen im Normalfall nur am Dichtungsrahmen 75 anliegen, während zu den Abstützflächen 37 hin ein kleiner Spalt vorhanden ist. Erst wenn die Rollen 14 durch die Wälzkräfte gegen die Abstützfläche 37 gedrängt werden, wird der kleine Spalt aufgrund der Elastizität des Dichtungsrahmens 75 aufgehoben. Hierdurch soll eine unnötige Geräuschentwicklung durch die metallische Reibung zwischen den Rollen 14 und dem Tragkörper 30 vermieden werden.

Fig. 3 zeigt eine Endkappe 71 mit einem eingesetzten Dichtungsrahmen 75, der als gesondertes Bauteil ausgeführt ist. Die Endkappe 71 bildet das zentrale Bauteil der Umlenkbaugruppe, in dem die gebogenen Umlenkkanäle 78 vorgesehen sind. Der genaue Aufbau der Umlenkbaugruppe 70 ist der DE 10 2007 056 862 zu entnehmen, auf die hier noch einmal ausdrücklich verwiesen wird. Die beiden Führungsfortsätze 74 sind einstückig an der aus Kunststoff spritzgegossenen Endkappe 71 vorgesehen, wobei sie sich über die halbe Länge des Tragkörpers in Längsrichtung erstrecken, so dass die Führungsfortsätze 74 beider Endkappen 71 zusammen die Rollen über die gesamte Länge des Tragkörpers unterbrechungsfrei seitlich führen. Der Dichtungsrahmen 75 ist über einen endseitigen Haltesteg 79 mit beiden Endkappen verrastet. In Fig. 3 wurde der Übersichtlichkeit wegen der rechte Dichtungsrahmen und die vorne liegende Endkappe weggelassen.

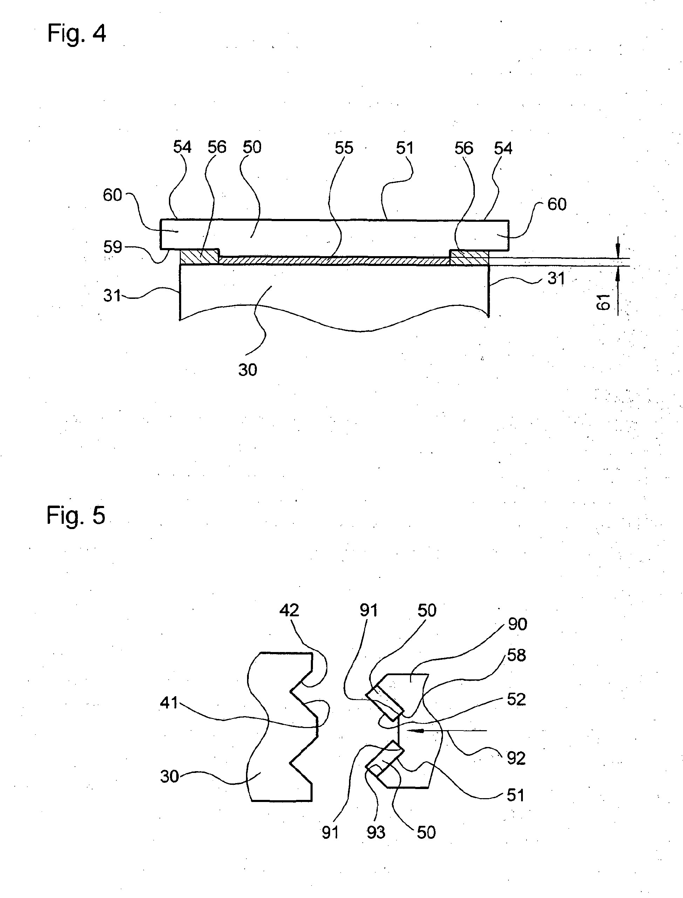

Fig. 4 zeigt einen grobschematischen Längsschnitt des mit dem Tragkörper 30 verklebten Wälzflächenteils 50. An den beiden Längsstirnflächen 31 des Tragkörpers 30, also im Rolleneinlaufbereich 54 ist das Wälzflächenteil 50 biegeverformbar ausgeführt. Zum einen ist eine Füllschicht 56 unter dem Wälzflächenteil 50 vorgesehen, die eine wesentlich geringere Steifigkeit aufweist als die Klebestoffschicht 55. Die Füllschicht 56 besteht beispielsweise aus einem Gummiwerkstoff wie Polyurethan. Weiter weist das Wälzflächenteil 50 zwei über die Längsstirnfläche 31 des Tragkörpers 30 überstehende Abschnitte 59 auf, die sich in die Umlenkbaugruppe hinein erstrecken. Folglich ist das Wälzflächenteil 50 im Rolleneinlaufbereich 54 nur mit sehr geringer Steifigkeit abgestützt, wodurch dieser Abschnitt des dünnen Wälzflächenteils 50 durch die einlaufenden Rollen nach unten gebogen wird. Die Länge des biegeelastischen Bereichs 60 ist gemäß der EP 1 443 229 A2 größer als der Rollendurchmesser ausgeführt, damit immer wenigstens eine Rolle diesen Bereich verbiegt. Um genügend Freiraum für den Biegeweg bereit zu stellen, ist das Wälzflächenteil 50 im biegeelastischen Bereich 60 dünner ausgeführt als im verbleibenden Bereich. Diese Abflachung des Wälzflächenteils 50 kann beispielsweise dadurch hergestellt werden, dass in einem Arbeitsgang mit dem Abscheren des Wälzflächenteils 50 von einem entsprechenden Profilstab eine plastische Umformung an dem Wälzflächenteil 50 vorgenommen wird.

Bei der Klebstoffschicht 55 handelt es sich um eine Epoxydharzschicht mit einer Schichtdicke 61 von ca. 20 µm bis 80 µm. Wegen der geringen Schichtdicke zeigt die Klebstoffschicht 55 nur eine sehr geringe elastische Nachgiebigkeit, so dass die Steifigkeit des Linearwälzlagers durch die Klebung nahezu nicht beeinträchtigt wird. Um eine derart geringe Klebeschichtdicke 61 zu erzielen, muss ein Klebstoff eingesetzt werden, der nicht mit einem Füllstoff versehen ist. Es ist darauf hinzuweisen, dass die Füllschicht 56 vor dem Klebevorgang auf das einzelne Wälzflächenteil 50 aufgebracht wird, so dass diese nur an diesem anhaftet. Beim eigentlichen Klebevorgang verhindert die Füllschicht, dass überschüssiger Klebstoff in den mit der Füllschicht 56 versehenden Bereich gelangt. Der Klebstoff wird vielmehr in den oben beschriebenen seitlichen Klebespalt fließen. Es ist darüber hinaus denkbar, dass auch an den Seitenrändern des Wälzflächenteiles 50 eine (nicht dargestellte) Füllschicht vorgesehen ist, damit das Wälzflächenteil 50 nicht über die gesamte Breite mit dem Tragkörper 30 verklebt ist. Auf diese Weise können übermäßige Randspannungen an den Wälzflächen vermieden werden, wenn die Wälzfläche 51 exakt eben ausgeführt ist und nicht wie üblich ein schwach logarithmisch gekrümmtes Oberflächenprofil aufweist.

Fig. 5 zeigt den Vorgang des Verklebens der Wälzflächenteile 50 mit dem Tragkörper 30 unter Zuhilfenahme einer Montagehilfe 90. Die Wälzflächenteile 50 werden in eine V-förmige Ausnehmung 93 der Montagehilfe 90 eingelegt, so dass die Wälzflächen 51 bereits vor der später folgenden Schleifbearbeitung genau ausgerichtet sind. Durch die Ausrichtkontur 91, die an der zweiten Seitenfläche 58 der Wälzflächenteile 50 anliegt, werden letztgenannte genau parallel zur Längsrichtung ausgerichtet. In dieser Position werden sie mittels eines Vakuumsaugers oder mittels Magnetkraft gehalten. Anschließend wird der Klebstoff punktförmig sowohl auf die Rückseite 52 der Wälzflächenteile 50 als auch auf die beiden ersten L-Schenkel 41 des Tragkörpers 30 aufgebracht. Sodann werden die Wälzflächenteile 50 mit der Montagehilfe 90 in der Druckrichtung 92 gegen den Tragkörper 30 gepresst. Die V-förmige Ausnehmung 93 der Montagehilfe 90, die Lage der beiden zweiten L-Schenkel 42 am Tragkörper 30 und die Querschnittsabmessungen der Wälzflächenteile 50 sind so aufeinander abgestimmt, dass die Wälzflächenteile mit geringem Abstand zu den zweiten L-Schenkeln 42 in den Tragkörper 30 eingepresst werden. Somit ist sichergestellt, dass die Wälzflächenteile 50 durch die zweiten L-Schenkel 42 nicht gegenüber der Montagehilfe 90 verschoben werden. Gleichzeitig wird ein seitlicher Klebespalt geschaffen, der den überschüssigen Klebstoff definiert aufnehmen kann.

### Bezugszeichenliste

- 10: Linearwälzlager
- 11: Führungswagen
- 12: Führungsschiene
- 13: Längsrichtung
- 14: Rolle
- 15: Wälzfläche der Führungsschiene
- 16: Drucklinie
- 17: Eckenradius der Rolle
- 18: Stirnfläche der Rolle

- 30: Tragkörper
- 31: Längsstirnfläche des Tragkörpers
- 32: dachförmiger Vorsprung
- 33: Dachhälfte
- 34: Scheitel des dachförmigen Vorsprungs
- 35: Querrichtung
- 37: Abstützfläche am Tragkörper zur Führung der Rollen
- 38: Rücklaufkanal
- 39: Freistich
- 40: L-förmige Ausnehmung
- 41: erster L-Schenkel
- 42: zweiter L-Schenkel
- 43: seitlicher Klebespalt
- 44: geneigte Fläche zur Anlage des Dichtungsrahmens
- 46: Spalt
- 50: Wälzflächenteil
- 51: Wälzfläche
- 52: Rückseite des Wälzflächenteils
- 53: Vorderseite des Wälzflächenteils
- 54: Rolleneinlaufbereich
- 55: Klebstoffschicht
- 56: Füllschicht
- 57: erste Seitenfläche des Wälzflächenteils
- 58: zweite Seitenfläche des Wälzflächenteils
- 59: überstehender Abschnitt
- 60: biegeelastischer Bereich
- 61: Klebeschichtdicke

- 70: Umlenkbaugruppe
- 71: Endkappe
- 72: Führungsteil
- 73: Haltevorsprung am Führungsteil
- 74: Führungsfortsatz
- 75: Dichtungsrahmen
- 76: Anlagefläche des Führungsfortsatzes
- 77: Dichtlippe des Dichtungsrahmens
- 78: Umlenkkanal
- 79: Haltesteg
- 90: Montagehilfe
- 91: Anlagekontur
- 92: Druckrichtung
- 93: V-förmige Ausnehmung

## Patentansprüche

1. Führungswagen (11) für ein Linearwälzlager (10), der über wenigstens eine Reihe von Rollen (14) an einer sich in einer Längsrichtung (13) erstreckenden Führungsschiene (12) längsbeweglich abstützbar ist, wobei jeder Rollenreihe ein gesondertes Wälzflächenteil (50) aus gehärtetem Stahl mit einer Wälzfläche (51) zum Last übertragenden Abwälzen der Rollen (14) zugeordnet ist, wobei das Wälzflächenteil (50) über eine Klebstoffschicht (55) mit einem Tragkörper (30) verbunden ist,
**dadurch gekennzeichnet, dass** die Klebstoffschicht (55) an der der Wälzfläche (51) abgewandten Rückseite (52) des Wälzflächenteils (50) im Wesentlichen eben ausgeführt ist, wobei das Wälzflächenteil (50) in einer im Querschnitt betrachtet L-förmigen Ausnehmung (40) des Tragkörpers (30) aufgenommen ist, wobei das Wälzflächenteil eine im Wesentlichen rechteckige Querschnittsform aufweist, die über die gesamte Länge des Wälzflächenteils im Wesentlichen konstant ist.

2. Führungswagen nach Anspruch 1,
**dadurch gekennzeichnet, dass** die Klebstoffschicht (55) die Rückseite (52) des Wälzflächenteils (50) im Wesentlichen vollständig von dem Tragkörper (30) trennt.

3. Führungswagen nach einem der vorstehenden Anspruche,
**dadurch gekennzeichnet, dass** das Wälzflächenteil seitlich mit einem Schenkel (42) der L-förmigen Ausnehmung (40) verklebt ist.

4. Führungswagen nach einem der vorstehenden Ansprüche,
**dadurch gekennzeichnet, dass** der Klebstoff ein Epoxydharz ist.

5. Führungswagen nach einem der vorstehenden Ansprüche,
**dadurch gekennzeichnet, dass** das Wälzflächenteil an der Vorderseite (53) mit der Wälzfläche (51) im Wesentlichen eben ausgeführt ist, wobei die Vorderseite (53) vorzugsweise parallel zur Rückseite (52) des Wälzflächenteils (50) ist.

6. Führungswagen nach einem der vorstehenden Ansprüche,
**dadurch gekennzeichnet, dass** der Tragkörper (30) die Rollen (14) in einer Querrichtung (35), die parallel zur Wälzfläche (51) und senkrecht zur Längsrichtung (13) gerichtet ist, abstützen kann.

7. Führungswagen nach einem der vorstehenden Ansprüche,
**dadurch gekennzeichnet, dass** an dem Tragkörper (30) ein dachförmiger Vorsprung (32) vorgesehen ist, an dessen beiden Dachhälften (33) je ein Wälzflächenteil (50) für je eine gesonderte Rollenreihe vorgesehen ist, wobei die beiden Wälzflächenteile (50) bündig mit dem Scheitel (34) des dachförmigen Vorsprungs (32) abschließen oder über diesen überstehen.

8. Führungswagen nach Anspruch 7,
**dadurch gekennzeichnet, dass** die Rollenreihen endlos umlaufen können, wobei an wenigstens einer Längsstirnfläche (31) des Tragkörpers (30) eine gesonderte Umlenkbaugruppe (70) für die Rollen (14) vorgesehen ist, wobei an der Umlenkbaugruppe (70) wenigstens ein sich in Längsrichtung (13) erstreckender Führungsfortsatz (74) vorgesehen ist, der im Bereich des Scheitels (34) des dachförmigen Vorsprungs (32) an den zugeordneten Wälzflächenteilen (50) anliegt, so dass die Umlenkbaugruppe (70) relativ zum Tragkörper (30) ausgerichtet ist.

9. Führungswagen nach einem der vorstehenden Ansprüche,
**dadurch gekennzeichnet, dass** wenigstens ein endseitiger Rolleneinlaufbereich (54) des Wälzflächenteils (50) biegeverformbar ausgeführt ist, wobei in dem Rolleneinlaufbereich (54) zwischen dem Wälzflächenteil (50) und dem Tragkörper (30) entweder ein Freiraum oder eine Füllschicht (56) mit einer wesentlich höheren Elastizität als die Klebstoffschicht (55) vorgesehen ist.

10. Führungswagen nach Anspruch 9,
**dadurch gekennzeichnet, dass** die Füllschicht (56) fest an dem Wälzflächenteil (50) anhaftet, wobei sie am Tragkörper (30) lose aufliegt.

11. Führungswagen nach einem der Ansprüche 9 oder 10,
**dadurch gekennzeichnet, dass** das Wälzflächenteil (50) über wenigstens eine, vorzugsweise über beide, Längsstirnflächen (31) des Tragkörpers (30) übersteht.

12. Linearwälzlager (10) mit einer sich in einer Längsrichtung (13) erstreckenden Führungsschiene (12), an der ein Führungswagen (11) nach einem der vorstehenden Ansprüche über wenigstens eine Reihe von Rollen (14) längsbeweglich abgestützt ist.

13. Linearwälzlager nach Anspruch 12,
**dadurch gekennzeichnet, dass** wenigstens zwei Rollenreihen vorgesehen sind, wobei die Rollen (14) unter Vorspannung zwischen der Führungsschiene (12) und dem Führungswagen (11) eingebaut sind.

14. Verfahren zur Herstellung eines Führungswagens nach einem der Ansprüche 7 bis 11,
**dadurch gekennzeichnet, dass** zwei Wälzflächenteile (50) in einer V-förmigen Ausnehmung (91) einer Montagehilfe (90) ausgerichtet gehalten werden, wobei Klebstoff auf den Tragkörper (30) und/oder die Wälzflächenteile (50) aufgetragen wird, und wobei die Wälzflächenteile (50) mit der Montagehilfe (90) gegen den dachförmigen Vorsprung (34) des Tragkörpers (30) gepresst werden.

15. Verfahren nach Anspruch 14,
**dadurch gekennzeichnet, dass** die Wälzflächen (51) der Wälzflächenteile (50) anschließend geschliffen werden, wobei vorzugsweise im gleichen Arbeitsgang eine Seitenfläche (58) der Wälzflächenteile (50) geschliffen werden.

## Claims

1. Guide carriage (11) for a linear rolling bearing (10), which guide carriage can be supported in a longitudinally movable manner, via at least one row of rollers (14), on a guide rail (12) extending in a longitudinal direction (13), each roller row being assigned a separate rolling-surface part (50) made from hardened steel and having a rolling surface (51) for the load-transferring rolling of the rollers (14), the rolling-surface part (50) being connected to a carrying body (30) via an adhesive layer (55), **characterized in that** the adhesive layer (55) is formed in an essentially planar manner on the rear side (52), facing away from the rolling surface (51), of the rolling-surface part (50), the rolling-surface part (50) being accommodated in a recess (40) of L-shaped cross section of the carrying body (30), the rolling-surface part having an essentially rectangular cross-sectional shape which is essentially constant over the entire length of the rolling-surface part.

2. Guide carriage according to Claim 1, **characterized in that** the adhesive layer (55) separates the rear side (52) of the rolling-surface part (50) essentially completely from the carrying body (30).

3. Guide carriage according to one of the preceding claims, **characterized in that** the rolling-surface part is glued laterally to a leg (42) of the L-shaped recess (40).

4. Guide carriage according to one of the preceding claims, **characterized in that** the adhesive is an epoxy resin.

5. Guide carriage according to one of the preceding claims, **characterized in that** the rolling-surface part is formed, on the front side (53), in an essentially planar manner with the rolling surface (51), the front side (53) being preferably parallel to the rear side (52) of the rolling-surface part (50).

6. Guide carriage according to one of the preceding claims, **characterized in that** the carrying body (30) can support the rollers (14) in a transverse direction (35) which is directed parallel to the rolling surface (51) and perpendicularly to the longitudinal direction (13).

7. Guide carriage according to one of the preceding claims, **characterized in that**, on the carrying body (30), a roof-shaped projection (32) is provided, on each of the two roof halves (33) of which a rolling-surface part (50) is provided for a separate roller row in each case, the two rolling-surface parts (50) terminating flush with the vertex (34) of the roof-shaped projection (32) or projecting above this.

8. Guide carriage according to Claim 7, **characterized in that** the roller rows can circulate endlessly, a separate deflection subassembly (70) for the rollers (14) being provided on at least one longitudinal end face (31) of the carrying body (30), there being provided on the deflection subassembly (70) at least one guide extension (74) which extends in the longitudinal direction (13) and which bears, in the region of the vertex (34) of the roof-shaped projection (32), against the assigned rolling-surface parts (50), so that the deflection subassembly (70) is oriented in relation to the carrying body (30).

9. Guide carriage according to one of the preceding claims, **characterized in that** at least one end-face roller run-in region (54) of the rolling-surface part (50) is formed in a flexurally deformable manner, either a free space or a filler layer (56) with substantially higher elasticity than the adhesive layer (55) being provided in the roller run-in region (54) between the rolling-surface part (50) and the carrying body (30).

10. Guide carriage according to Claim 9, **characterized in that** the filler layer (56) adheres firmly to the rolling-surface part (50), at the same time lying loosely on the carrying body (30).

11. Guide carriage according to either one of Claims 9 and 10, **characterized in that** the rolling-surface part (50) projects beyond at least one, preferably beyond both longitudinal end faces (31) of the carrying body (30).

12. Linear rolling bearing (10) with a guide rail (12) which extends in a longitudinal direction (13) and on which a guide carriage (11) according to one of the preceding claims, is supported in a longitudinally moveable manner via at least one row of rollers (14).

13. Linear rolling bearing according to Claim 12, **characterized in that** at least two roller rows are provided, the rollers (14) being installed under prestress between the guide rail (12) and the guide carriage (11).

14. Method for producing a guide carriage according to one of Claims 7 to 11, **characterized in that** two rolling-surface parts (50) are held in an oriented manner in a V-shaped recess (91) of an assembly aid (90), adhesive being applied to the carrying body (30) and/or the rolling-surface parts (50), and the rolling-surface parts (50) being pressed against the roof-shaped projection (34) of the carrying body (30) by means of the assembly aid (90).

15. Method according to Claim 14, **characterized in that** rolling surfaces (51) of the rolling-surface parts (50) are subsequently ground, a side face (58) of the rolling-surface parts (50) preferably being ground in the same operation.

## Revendications

1. Chariot de guidage (11) pour un palier à roulement linéaire (10) qui peut être supporté de manière déplaçable longitudinalement par le biais d'au moins une rangée de rouleaux (14) sur un rail de guidage (12) s'étendant dans une direction longitudinale (13), chaque rangée de rouleaux étant associée à une partie de surface de roulement séparée (50) constituée d'acier trempé avec une surface de roulement (51) pour le roulement avec transfert de charge des rouleaux (14), la partie de surface de roulement (50) étant connectée par le biais d'une couche d'adhésif (55) à un corps porteur (30),
**caractérisé en ce que** la couche d'adhésif (55) est réalisée sous forme essentiellement plane au niveau du côté arrière (52) de la partie de surface de roulement (50) opposé à la surface de roulement (51), la partie de surface de roulement (50) étant reçue dans un évidement (40) en forme de L du corps porteur (30), considéré en section transversale, la partie de surface de roulement présentant une forme en section transversale essentiellement rectangulaire qui est essentiellement constante sur toute la longueur de la partie de surface de roulement.

2. Chariot de guidage selon la revendication 1, **caractérisé en ce que** la couche d'adhésif (55) sépare le côté arrière (52) de la partie de surface de roulement (50) essentiellement complètement du corps porteur (30).

3. Chariot de guidage selon l'une quelconque des revendications précédentes,
**caractérisé en ce que** la partie de surface de roulement est collée latéralement à une branche (42) de l'évidement (40) en forme de L.

4. Chariot de guidage selon l'une quelconque des revendications précédentes,
**caractérisé en ce que** l'adhésif est une résine époxy.

5. Chariot de guidage selon l'une quelconque des revendications précédentes,
**caractérisé en ce que** la partie de surface de roulement est réalisée de manière essentiellement plane au niveau du côté avant (53) avec la surface de roulement (51), le côté avant (53) étant de préférence parallèle au côté arrière (52) de la partie de surface de roulement (50).

6. Chariot de guidage selon l'une quelconque des revendications précédentes,
**caractérisé en ce que** le corps porteur (30) peut supporter les rouleaux (14) dans une direction transversale (35) qui est orientée parallèlement à la surface de roulement (51) et perpendiculairement à la direction longitudinale (13).

7. Chariot de guidage selon l'une quelconque des revendications précédentes,
**caractérisé en ce qu'**une saillie en forme de toit (32) est prévue au niveau du corps porteur (30), au niveau des deux moitiés de toit (33) de laquelle est à chaque fois prévue une partie de surface de roulement (50) pour une rangée de rouleaux séparée respective, les deux parties de surface de roulement (50) se terminant en affleurement avec le sommet (34) de la saillie en forme de toit (32) ou dépassant au-delà de celle-ci.

8. Chariot de guidage selon la revendication 7,
**caractérisé en ce que** les rangées de rouleaux peuvent tourner sans fin, un module de déviation (70) séparé pour les rouleaux (14) étant prévu au niveau d'au moins une face frontale longitudinale (31) du corps porteur (30), au moins une saillie de guidage (74) s'étendant dans la direction longitudinale (13) étant prévue au niveau du module de déviation (70), laquelle, dans la région du sommet (34) de la saillie en forme de toit (32), s'applique contre les parties de surface de roulement associées (50), de telle sorte que le module de déviation (70) soit orienté par rapport au corps porteur (30).

9. Chariot de guidage selon l'une quelconque des revendications précédentes,
**caractérisé en ce qu'**au moins une région d'entrée de rouleaux du côté de l'extrémité (54) de la partie de surface de roulement (50) est réalisée de manière déformable en flexion, soit un espace libre soit une couche de remplissage (56) avec une élasticité nettement supérieure à la couche d'adhésif (55) étant prévu(e) dans la région d'entrée de rouleaux (54) entre la partie de surface de roulement (50) et le corps porteur (30).

10. Chariot de guidage selon la revendication 9,
**caractérisé en ce que** la couche de remplissage (56) adhère fixement à la partie de surface de roulement (50), en reposant lâchement sur le corps porteur (30).

11. Chariot de guidage selon l'une quelconque des revendications 9 ou 10,
**caractérisé en ce que** la partie de surface de roulement (50) dépasse au-delà d'au moins une, de préférence au-delà des deux, face(s) frontale(s) longitudinale(s) (31) du corps porteur (30).

12. Palier à roulement linéaire (10) comprenant un rail de guidage (12) s'étendant dans une direction longitudinale (13), au niveau duquel un chariot de guidage (11) selon l'une quelconque des revendications précédentes est supporté de manière déplaçable longitudinalement par le biais d'au moins une rangée de rouleaux (14).

13. Palier à roulement linéaire selon la revendication 12,
**caractérisé en ce qu'**au moins deux rangées de rouleaux sont prévues, les rouleaux (14) étant incorporés avec précontrainte entre le rail de guidage (12) et le chariot de guidage (11).

14. Procédé de fabrication d'un chariot de guidage selon l'une quelconque des revendications 7 à 11, **caractérisé en ce que** deux parties de surface de roulement (50) sont maintenues de manière orientée dans un évidement en forme de V (91) d'un auxiliaire de montage (90), de l'adhésif étant appliqué sur le corps porteur (30) et/ou sur les parties de surface de roulement (50), et les parties de surface de roulement (50) étant pressées avec l'auxiliaire de montage (90) contre la saillie en forme de toit (34) du corps porteur (30).

15. Procédé selon la revendication 14,
**caractérisé en ce que** les surfaces de roulement (51) des parties de surface de roulement (50) sont ensuite meulées, une face latérale (58) des parties de surface de roulement (50) étant de préférence meulée dans la même passe de travail.
